(19) Europäisches Patentamt
European Patent Office
Office européen des brevets

(11) **EP 3 465 396 B1**

(12) **EUROPÄISCHE PATENTSCHRIFT**

(45) Veröffentlichungstag und Bekanntmachung des Hinweises auf die Patenterteilung:
**27.10.2021 Patentblatt 2021/43**

(21) Anmeldenummer: **17711212.5**

(22) Anmeldetag: **20.03.2017**

(51) Int Cl.:
***G06F 3/041*** *(2006.01)* ***B32B 17/10*** *(2006.01)*

(86) Internationale Anmeldenummer:
**PCT/EP2017/056478**

(87) Internationale Veröffentlichungsnummer:
**WO 2017/202517 (30.11.2017 Gazette 2017/48)**

(54) **VERBUNDGLAS-SCHEIBE MIT EINER SENSORANORDNUNG UND VERFAHREN ZUR HERSTELLUNG EINER VERBUNDGLAS-SCHEIBE MIT EINER SENSORANORDNUNG**

LAMINATED GLASS WITH A SENSOR ARRANGEMENT AND METHOD FOR MAKING A LAMINATED GLASS WITH A SENSOR ARRANGEMENT

VITRE COMPOSITE AVEC UN SYSTÈME DE CAPTEUR ET PROCÉDÉ DE FABRICATION D'UNE VITRE COMPOSITE AVEC UN SYSTÈME DE CAPTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Validierungsstaaten:
**MA**

(30) Priorität: **23.05.2016 EP 16170773**

(43) Veröffentlichungstag der Anmeldung:
**10.04.2019 Patentblatt 2019/15**

(73) Patentinhaber: **SAINT-GOBAIN GLASS FRANCE 92400 Courbevoie (FR)**

(72) Erfinder:
• WEBER, Patrick
**52477 Alsdorf (DE)**
• LABROT, Michael
**52072 Aachen (DE)**
• SCHMALBUCH, Klaus
**84220 Goult (FR)**

(74) Vertreter: **Gebauer, Dieter Edmund Splanemann Patentanwälte Partnerschaft Rumfordstraße 7 80469 München (DE)**

(56) Entgegenhaltungen:
**WO-A1-2013/091961    DE-A1- 3 532 120**

**Beschreibung**

Die Erfindung betrifft eine Verbundglas-Scheibe mit einer Sensoranordnung und ein Verfahren zur Herstellung einer Verbundglas-Scheibe mit einer Sensoranordnung.

Es ist bekannt, dass Schaltbereiche durch eine Flächenelektrode oder durch eine Anordnung von zwei gekoppelten Elektroden ausgebildet werden können, beispielsweise als kapazitive Schaltbereiche. Nähert sich ein Objekt, z.B. ein Finger, dem Schaltbereich an, so ändert sich die Kapazität der Flächenelektrode gegen Erde oder die Kapazität des von den zwei gekoppelten Elektroden gebildeten Kondensators. Derartige Schaltbereiche sind beispielsweise aus US 2010/179725 A1, US 6 654 070 B1, WO 2013/091961 A1 und US 2006/275599 A1 bekannt.

Die Kapazitätsänderung wird über eine Schaltungsanordnung oder Sensorelektronik gemessen und bei Überschreiten eines Schwellwertes wird ein Schaltsignal ausgelöst. Schaltungsanordnungen für kapazitive Schalter sind beispielsweise aus DE 20 2006 006 192 U1, EP 0 899 882 A1, US 6,452,514 B1 und EP 1 515 211 A1 bekannt.

Aus WO 2013 / 053 611 A1 ist eine elektrochrome Isolierverglasung mit Sensorfläche bekannt.

Weiterhin ist aus DE 35 32 120 A1 eine Windschutzscheibe mit einer reflektierenden

Einrichtung zur Einspiegelung von optischen Informations- bzw. Warn-Signalen in das Gesichtsfeld des Fahrers mittels eines Reflexionshologrammes mit Spiegeleigenschaften bekannt.

Insbesondere bei durchsichtigen oder kleinflächigen Sensorflächen kann es jedoch problematisch sein, die Sensorfläche als solche durch einen Benutzer erkennen zu können.

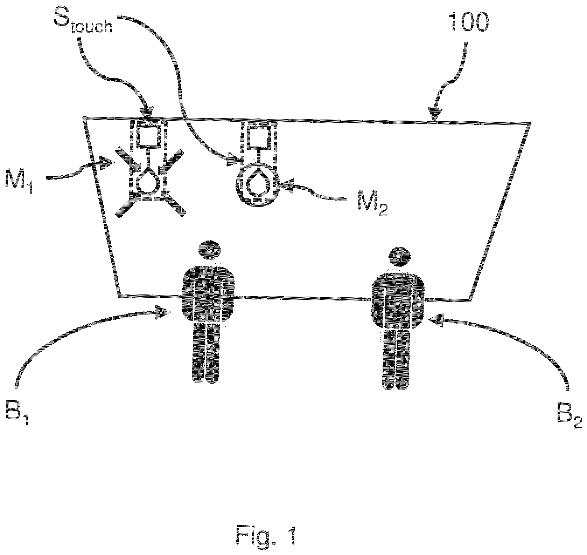

In Figur 1 ist eine beispielhafte Situation schematisch in Bezug auf einen Benutzer $B_1$ und einen Benutzer $B_2$ dargestellt.

Dargestellt sind schematisch 2 Sensoranordnungen $S_{touch}$, welche sich am oberen Rand einer Verbundglasscheibe 100 befinden. Damit diese erkennbar werden, ist in Bezug auf die linke Sensoranordnung eine erste Markierung $M_1$ aufgebracht, die beispielsweise den sensitiven Bereich mittels Pfeilen signalisiert, und in Bezug auf die rechte Sensoranordnung ist eine zweite Markierung $M_2$ aufgebracht, die beispielsweise den Bereich mittels eines Kreises signalisiert. Dabei ist zu bemerken, dass die dauerhafte Anbringung von Markierungen sich als störend darstellen kann, insbesondere jedoch, wenn eine Sensoranordnung nicht von einer Person, die nicht in Reichweite der Sensoranordnung ist, bedient werden kann. Beispielsweise ist die linke Sensoranordnung durch Person $B_2$ nicht erreichbar, sodass die Markierung $M_1$ das Sichtfeld der Person $B_2$ einschränkt. Solche Situationen sind insbesondere bei Fahrzeugscheiben nachteilig, da hier bestimmte Anforderungen an das Sichtfeld gestellt werden.

Es wäre daher wünschenswert, Verbundglas-Scheiben mit Sensoranordnungen bereitstellen zu können, die Sensoranordnungen positions-selektiv wahrnehmbar machen.

Die Aufgabe wird gelöst durch eine Verbundglas-Scheibe mit einer Sensoranordnung nach Patentanspruch 1. Die Verbundglas-Scheibe weist eine erste Glas-Schicht und eine zweite Glas-Schicht, verbunden durch eine Kombinationsfolie, auf, wobei die Sensoranordnung geeignet ist, die Annäherung eines Fingers zu erkennen. Dabei ist am Ort der Sensoranordnung ein Hologramm angeordnet, welches bei Beleuchtung für einen Betrachter optisch wahrnehmbar wird, wobei das Hologramm zwischen der ersten Glas-Schicht und der zweiten Glas-Schicht angeordnet ist.

Mit der erfindungsgemäßen Anordnung wird erreicht, dass eine Sensoranordnung positions-selektiv wahrnehmbar wird, sodass eine Person, die auch die Sensoranordnung bedienen kann, die Position der Sensoranordnung erkennen kann, während für andere Personen, die die Sensoranordnung nicht bedienen können, Störungen des Sichtfeldes vermindert werden.

In einer Ausgestaltung der Erfindung weist die Sensoranordnung einen kapazitiven Sensor oder einen optischen Sensor auf. D.h. mittels der Erfindung können unterschiedliche Arten von Sensoren kenntlich gemacht werden, wodurch ein hohe Einsatzbandbreite ermöglich wird.

In einer weiteren Ausgestaltung der Erfindung ist das Hologramm auf der Kombinationsfolie aufgebracht. Mit der Anbringung auf der Kombinationsfolie kann die Produktion vereinfacht werden und zum anderen das Hologramm zuverlässig vor negativen Produktionseinflüssen als auch vor Beschädigungen durch äußere Einwirkungen geschützt werden.

Gemäß einer weiteren Ausgestaltung der Erfindung enthält die Kombinationsfolie zumindest einen Stoff ausgewählt aus der Gruppe aufweisend Polybutylenterephthalat (PBT), Polycarbonat (PC), Polyethylenterephthalat (PET) und Polyethylennaphthalat (PEN), Polyvinylchlorid (PVC), Polyvinylfluoride (PVF), Polyvinylbutyral (PVB), Ethylenvinylacetat (EVA), Polyacrylat (PA), Polymethylmethacrylat (PMMA), Polyurethan (PUR), und/oder Gemische und Copolymere davon. D.h. die Erfindung erlaubt die vielseitige Anpassung an unterschiedliche optische und mechanische Gegebenheiten.

Gemäß einer weiteren Ausgestaltung der Erfindung sind zumindest Teile der Sensoranordnung als Drähte auf oder in der Kombinationsfolie aufgebracht bzw. eingebracht. Mit der Aufbringung bzw. Einbringung von Teilen der Sensoranordnung auf der Kombinationsfolie wird erreicht, dass die Produktionskosten reduziert werden können und die Scheibendicke gering gehalten werden kann.

In einer weiteren Ausgestaltung der Erfindung weist die Sensoranordnung eine flächige, transparente, elektrisch leitfähige Schicht oder mehrere flächige, transparente, elektrisch leitfähige Schichten auf, welche durch isolierende Trennlinien begrenzt sind.

Gemäß einer weiteren Ausgestaltung der Erfindung sind die Sensoranordnung und das Hologramm auf einem gemeinsamen Abschnitt der Kombinationsfolie oder einem Träger innerhalb der Verbundglasscheibe angeordnet. Mit der gemeinsamen Bereitstellung auf einen gemeinsamen Abschnitt können die Produktionskosten reduziert werden.

In einer weiteren Ausgestaltung ist das Hologramm so gestaltet, dass eine Darstellung des Hologramms bei einer in Bezug auf den Betrachter reflektiven Beleuchtung erscheint.D.h. durch gezielte Beleuchtung kann das Erscheinen / Verschwinden eines Hologramms gesteuert werden, sodass z.B. nur aktive Sensoranordnungen als solche erkennbar sind, während inaktive Sensoranordnungen verborgen bleiben. Zudem ist es möglich über unterschiedliche Beleuchtungen, z.B. unterschiedliche Winkel / unterschiedliches Licht, die Darstellung unterschiedlicher Hologramme in Bezug auf den Betrachter zu erzeugen.

Erfindungsgemäß ist das Hologramm so gestaltet, dass eine Darstellung des Hologramms bei einer in Bezug auf den Betrachter transmissiven Beleuchtung erscheint.D.h. durch äußere Beleuchtung kann das Erscheinen / Verschwinden eines Hologramms gesteuert werden, sodass z.B. nur bestimmte Sensoranordnungen als solche erkennbar sind, während inaktive Sensoranordnungen verborgen bleiben.

Gemäß einer weiteren Ausgestaltung der Erfindung weist eine erfindungsgemäße Verbundglasscheiben-Anordnung eine Verbundglasscheibe und eine Beleuchtungsquelle auf, welche kontrollierbar das Hologramm beleuchtet, sodass es dem Benutzer erscheint. Gemäß einer weiteren Ausgestaltung der Erfindung kann die erfindungsgemäße Verbundglas-Scheibe in Fahrzeugen oder Gebäuden oder als Informationsdisplay verwendet werden.D.h. die Anwendungsbreite ist sehr hoch, sodass die erfindungsgemäße Verbundglas-Scheibe kostengünstig hergestellt werden kann.

Gemäß einer weiteren Ausgestaltung der Erfindung kann die erfindungsgemäße Verbundglas-Scheibe in einem einfachen kostengünstigen Verfahren hergestellt werden, das das Erhalten eines Hologramms aufweist, das das Einbringen des Hologramms auf eine Kombinationsfolie der Verbundglasscheibe aufweist, wobei der Schritt des Einbringens ausgewählt ist aus Laminieren oder Kleben auf die Kombinationsfolie, und das das Fertigstellen der Verbundglasscheibe aufweist.

Gemäß der Erfindung ist das Hologramm zumindest teil-transparent.

Ausführungsformen der vorliegenden Erfindung werden in exemplarischer Weise mit Bezug auf die angehängten Zeichnungen beschrieben, welche zeigen:

Fig. 1 eine schematische Übersichtsdarstellung einer Verbundglas-Scheibe mit einer Sensoranordnung aus dem Stand der Technik,
Fig. 2 eine schematische Übersichtsdarstellung einer erfindungsgemäßen Verbundglas-Scheibe mit einer Sensoranordnung in Bezug auf eine erste Benutzer-Position,
Fig. 3 eine schematische Übersichtsdarstellung einer erfindungsgemäßen Verbundglas-Scheibe mit einer Sensoranordnung in Bezug auf eine zweite Benutzer-Position,
Fig. 4 einen schematischen Querschnitt durch eine erfindungsgemäße Sensoranordnung,
Fig. 5 eine schematische Übersichtsdarstellung einer erfindungsgemäßen Sensoranordnung, und
Fig. 6 einen schematischen Querschnitt durch ein Hologramm.

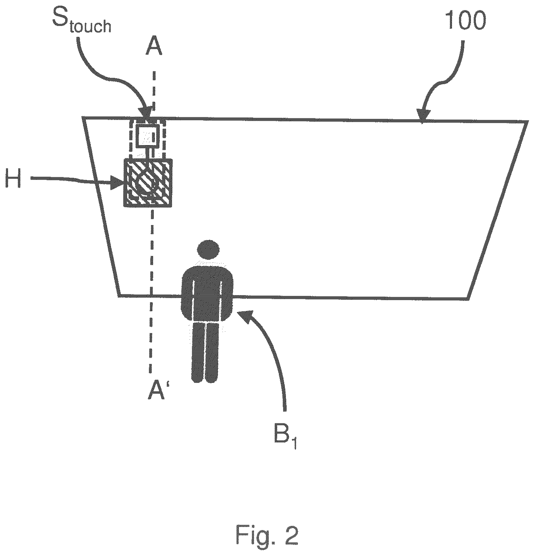

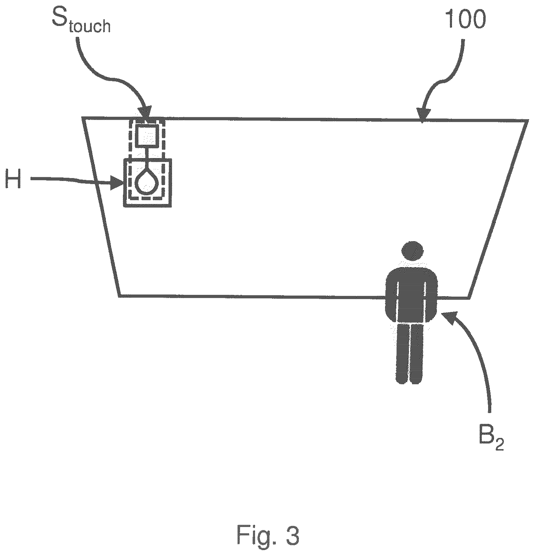

In Figur 2 ist eine beispielhafte Situation gemäß Ausführungsformen der Erfindung schematisch in Bezug auf einen Benutzer $B_1$ und in Figur 3 in Bezug auf eine weitere Person $B_2$ dargestellt.

Die erfindungsgemäße Verbundglas-Scheibe 100 weist eine Sensoranordnung $S_{touch}$ oder mehrere Sensoranordnungen $S_{touch}$ auf, wobei die Verbundglas-Scheibe 100 eine erste Glas-Schicht $GS_1$ und eine zweite Glas-Schicht $GS_2$, verbunden durch zumindest einer Kombinationsfolie F bzw. eine Vielzahl von Kombinationsfolien $F_1$, $F_2$, aufweist. Die Sensoranordnung(en) $S_{touch}$ ist/sind geeignet, die Annäherung eines Fingers zu erkennen. Der Sensorbereich selbst ist dadurch kenntlich gemacht, dass am Ort der Sensoranordnung ein Hologramm H angeordnet ist, welches bei Beleuchtung für einen Betrachter $B_1$ optisch wahrnehmbar wird, wobei das Hologramm H zwischen der ersten Glas-Schicht $GS_1$ und der zweiten Glas-Schicht $GS_2$ angeordnet ist.

D.h. analog zur Figur 1 ist in Figur 2 eine Sensoranordnung $S_{touch}$ dargestellt, welche sich am oberen Rand einer Verbundglasscheibe 100 befindet. Damit diese Sensoranordnung $S_{touch}$ erkennbar wird, ist in Bezug auf die Sensoranordnung $S_{touch}$ ein Hologramm H vorgesehen. Das Hologramm H kann dem Benutzer $B_1$ ähnlich wie die Markierungen $M_1$ und $M_2$ erscheinen. Hingegen ist das Hologramm H so gestaltet, dass es für Person $B_2$, die nicht in Reichweite der Sensoranordnung $S_{touch}$ ist und die Sensoranordnung $S_{touch}$ nicht bedienen kann, teiltransparent oder sogar unsichtbar ist. D.h., das Hologramm H schränkt das Sichtfeld der Person $B_2$ nicht ein.

Eine solche Situation ist insbesondere bei Fahrzeugscheiben von Vorteil, da hier bestimmte Anforderungen an das Sichtfeld gestellt werden. So kann z.B. die Sensoranordnung $S_{touch}$ beispielsweise nur für den Fahrer B1 sichtbar sein, z.B. zum Schalten von bestimmten Fahrzeugelementen, während der Beifahrer B2 die entsprechenden Markierungen in Form des Hologramms H nicht sehen kann. Umgekehrt kann es aber auch bei geeigneter Anbringung einer Sensorfläche $S_{touch}$ in Reichweite des Beifahrers B2 - z.B. zur Steuerung einer Klimatisierung / Fenster / Multimediaanlage - vorteilhaft sein, dass diese nur dem Beifahrer $B_2$ sichtbar ist, während sie für den Fahrer $B_1$ teil-transparent oder sogar unsichtbar bleibt und so sein Sichtfeld nicht einschränkt.

D.h. mittels des Hologramms H ist es möglich, positions-selektive Markierungen, z.B. zur Kenntlichmachung von Sensoranordnungen, bereitzustellen. Dabei wird ausgenutzt, dass sich ein Benutzer einer Sensoranordnung in einem bestimmten Winkelbereich relativ zur Verbundglas-Scheibe 100 befindet, während ein anderer Betrachter, der sich außerhalb der Reichweite der Sensoranordnung befindet, einen anderen Winkel relativ zum Sensorbereich einnimmt.

Dabei ist die erfindungsgemäße Verbundglas-Scheibe 100 nicht auf eine bestimmte Sensortechnik festgelegt. Vielmehr kann die Sensoranordnung $S_{touch}$ mit verschiedensten Sensortechniken zusammen verwendet werden. Beispielsweise weist die Sensoranordnung einen kapazitiven Sensor oder einen optischen Sensor auf. Die Sensoranordnung(en) $S_{touch}$ ist geeignet, die Annäherung eines Fingers zu erkennen. Die Annäherung kann z.B. im Falle eines kapazitiven Sensors durch Änderung von Ladungen auf einem Kondensator erkannt werden. Im Falle eines optischen Sensors ist die Erkennung z.B. anhand eines Schattenwurfes mittels eines lichtempfindlichen Widerstandes oder einer photoelektrischen Zelle oder aber mittels einer Kamera außerhalb der Verbundglas-Scheibe 100 möglich, die die Sensoranordnung beobachtet. Natürlich kann nicht nur die Annäherung sondern auch das direkte Auflegen eines Fingers auf den Sensorbereich erkannt werden.

In der nachfolgenden Beschreibung werden insbesondere kapazitive Sensoren zur Erkennung der Annäherung beschrieben werden. Die Erfindung ist jedoch hierauf nicht beschränkt.

In einer Ausgestaltung der Erfindung ist das Hologramm H auf der Kombinationsfolie F; $F_1$, $F_2$ aufgebracht.

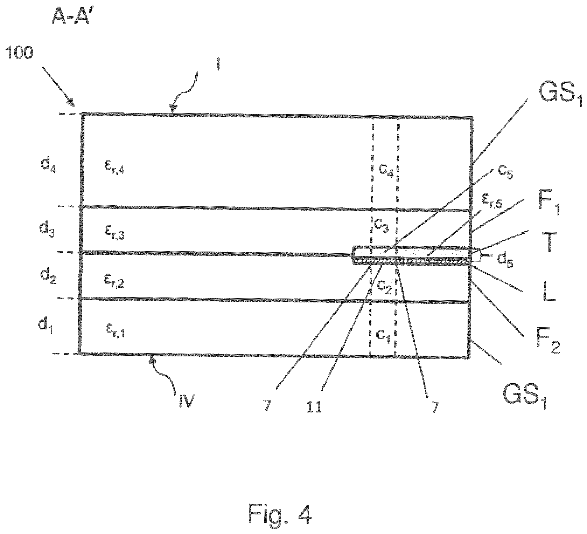

In Figur 4 ist ein beispielhafter Schnitt durch eine Verbundglas-Scheibe 100 entlang der Linie A-A' in Figur 2 gezeigt.

Dort befinden sich zwischen einer Glas-Scheibe $GS_1$ und einer Glas-Scheibe $GS_2$ beispielhaft zwei Kombinationsfolien $F_1$ und $F_2$. Hier kann nun beispielsweise auf eine der Folien $F_1$ oder $F_2$ das Hologramm an geeigneter Stelle aufgebracht sein, oder aber ein Träger T wird in einen Ausschnitt der Kombinationsfolie $F_1$, $F_2$ eingebracht oder - wie dargestellt - zwischen der Kombinationsfolie $F_1$, $F_2$ eingebracht. Dabei ist der Schnitt in Figur 4 nur beispielhaft zu verstehen und es können weitere Schichten zwischen der Glas-Scheibe $GS_1$ und einer Glas-Scheibe $GS_2$ vorgesehen sein.

Die Glas-Scheibe $GS_1$ und/oder die Glas-Scheibe $GS_2$ enthalten bevorzugt Glas, besonders bevorzugt Flachglas, Floatglas, Quarzglas, Borosilikatglas, Kalk-Natron-Glas, oder klare Kunststoffe, vorzugsweise starre klare Kunststoffe, insbesondere Polyethylen, Polypropylen, Polycarbonat, Polymethylmethacrylat, Polystyrol, Polyamid, Polyester, Polyvinylchlorid und/oder Gemische davon.

Die Glas-Scheibe $GS_1$ und die Glas-Scheibe $GS_2$ sind transparent, insbesondere für die Verwendung der Verbundglas-Scheibe 100 als Windschutzscheibe oder Rückscheibe eines Fahrzeugs oder anderen Verwendungen, bei denen eine hohe Lichttransmission erwünscht ist. Als transparent im Sinne der Erfindung wird eine Verbundglas-Scheibe 100 verstanden, die eine Transmission im sichtbaren Spektralbereich von größer als 70 % aufweist. Für Verbundglas-Scheiben 100, die nicht im verkehrsrelevanten Sichtfeld des Fahrers liegen, beispielsweise für Dachscheiben, kann die Transmission aber auch viel geringer sein, beispielsweise größer als 5 %.

Die Dicke von Glas-Scheibe $GS_1$ und/oder Glas-Scheibe $GS_2$ kann breit variieren und so hervorragend den Erfordernissen des Einzelfalls angepasst werden. Vorzugsweise werden Standardstärken von 1,0 mm bis 25 mm, bevorzugt von 1,4 mm bis 2,5 mm für Fahrzeugglas und bevorzugt von 4 mm bis 25 mm für Möbel, Geräte und Gebäude, insbesondere für elektrische Heizkörper, verwendet. Die Größe der Verbundglas-Scheibe 100 kann breit variieren und richtet sich nach der Größe der erfindungsgemäßen Verwendung. Das Substrat und gegebenenfalls die Deckscheibe weisen beispielsweise im Fahrzeugbau und Architekturbereich übliche Flächen von 200 cm² bis zu 20 m² auf.

Die Verbundglas-Scheibe 100 kann eine beliebige dreidimensionale Form aufweisen. Vorzugsweise hat die dreidimensionale Form keine Schattenzone, sodass sie beispielsweise durch Kathodenzerstäubung beschichtet werden kann. Bevorzugt sind die Substrate planar oder leicht oder stark in einer Richtung oder in mehreren Richtungen des Raumes gebogen. Insbesondere werden planare Glas-Scheiben $GS_1$ und $GS_2$ verwendet. Die Glas-Scheibe $GS_1$ und/oder $GS_2$ können farblos oder gefärbt sein.

Die Glas-Scheibe $GS_1$ und/oder die Glas-Scheibe $GS_2$ weisen bevorzugt eine relative Permittivität $\varepsilon_{r,1/4}$ von 2 bis 8 und besonders bevorzugt von 6 bis 8 auf. Bei derartigen relativen Permittivitäten konnte eine besonders gute Unterscheidung zwischen einer Berührung der Berührungsfläche über die außenseitige Oberfläche des Substrats von gegenüber der außenseitigen Oberfläche der Deckscheibe erzielt werden.

Besonders vorteilhaft ist es, wenn die Kombinationsfolie F; $F_1$, $F_2$ zumindest einen Stoff ausgewählt aus der Gruppe aufweisend Polybutylenterephthalat (PBT), Polycarbonat (PC), Polyethylenterephthalat (PET) und Polyethylennaphthalat (PEN), Polyvinylchlorid (PVC), Polyvinylfluoride (PVF), Polyvinylbutyral (PVB), Ethylenvinylacetat (EVA), Polypropylen (PP), Polyvinylchlorid (PVC), Polyacrylat (PA), Polymethylmethacrylat (PMMA), Polyurethan (PUR), Polyacetatharz, Gießharze, Acrylate, fluorinierte Ethylen-Propylene, Polyvinylfluorid und/oder Ethylen-Tetrafluorethylen und/oder Gemische und Copolymere davon enthält. Die Kombinationsfolie F; $F_1$, $F_2$ ist transparent.

Die Zwischenschicht zwischen der ersten Glas-Scheibe $GS_1$ und der zweiten Glas-Scheibe $GS_2$ kann

durch eine oder auch durch mehrere übereinander angeordnete Kombinationsfolien F; F₁, F₂ ausgebildet werden, wobei die Dicke einer Kombinationsfolie F; F₁, F₂ bevorzugt von 0,025 mm bis 1 mm beträgt, typischerweise 0,38 mm oder 0,76 mm. Die Zwischenschichten sind bevorzugt thermoplastisch und können nach der Lamination die Glas-Scheibe GS₁, die Glas-Scheibe GS₂ und eventuelle weitere Zwischenschichten miteinander verkleben. Die Zwischenschicht hat bevorzugt eine relative Permittivität von 2 bis 4 und besonders bevorzugt von 2,1 bis 2,9. Bei derartigen relativen Permittivitäten konnte eine besonders gute Unterscheidung zwischen einer Berührung der Berührungsfläche über die außenseitige Oberfläche der Glas-Scheibe GS₂ von gegenüber der außenseitigen Oberfläche der Glas-Scheibe GS₁ erzielt werden.

Der Träger T ist bevorzugt eine transparente Folie. Der Träger T enthält bevorzugt eine Polyethylenterepthalat (PET)-Folie oder besteht daraus. Die Dicke des Trägers T beträgt bevorzugt von 0,025 mm bis 0,1 mm. Der Träger hat bevorzugt eine relative Permittivität von 2 bis 4 und besonders bevorzugt von 2,7 bis 3,3. Mit einem derartigen Träger T lassen sich besonders gute Verbundglas-Scheiben 100 herstellen, da derart dünne Träger T auch bei nur abschnittsweiser Anordnung gut und optisch unauffällig in der Verbundglas-Scheibe 100 integrierbar sind. Gleichzeit lassen sich gute und selektive Schaltsignale erzeugen.

Weiterhin vorteilhaft ist es, wenn z.B. Teile der Sensoranordnung S_touch als Drähte auf oder in der Kombinationsfolie F; F₁, F₂ bzw. auf dem Träger T aufgebracht bzw. eingebracht sind.

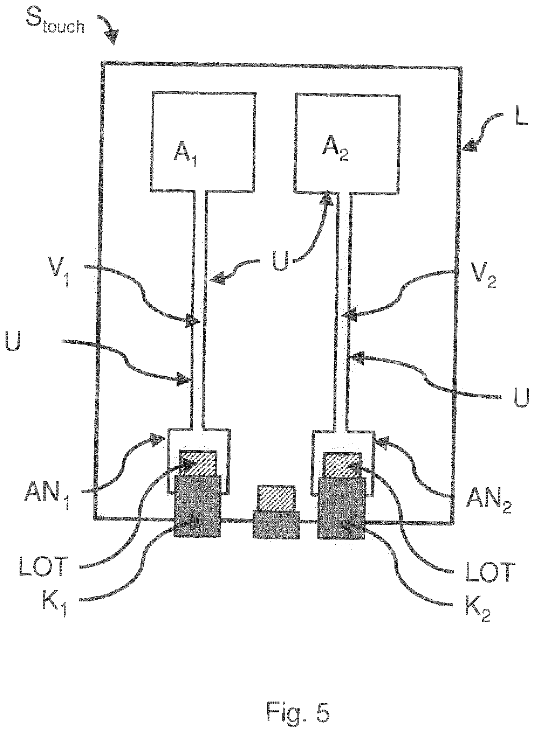

Dies wird nachfolgend am Beispiel eines kapazitiven Sensors in Bezug auf Figur 4 und 5 erläutert.

Beispielhaft kann auf dem Träger T eine elektrisch leitfähige Schicht L angeordnet sein. Die elektrisch leitfähige Schicht L enthält bevorzugt eine transparente, elektrisch leitfähige Beschichtung. Transparent bedeutet hier durchlässig für elektromagnetische Strahlung, vorzugsweise elektromagnetische Strahlung einer Wellenlänge von 300 nm bis 1.300 nm und insbesondere für sichtbares Licht.

Erfindungsgemäße elektrisch leitfähige Schichten L sind beispielsweise aus DE 20 2008 017 611 U1, EP 0 847 965 B1 oder WO2012/052315 A1 bekannt. Sie enthalten typischerweise eine oder mehrere, beispielsweise zwei, drei oder vier elektrisch leitfähige, funktionelle Schichten. Die funktionellen Schichten enthalten bevorzugt zumindest ein Metall, beispielsweise Silber, Gold, Kupfer, Nickel und/oder Chrom, oder eine Metalllegierung. Die funktionellen Schichten enthalten besonders bevorzugt mindestens 90 Gew. % des Metalls, insbesondere mindestens 99,9 Gew. % des Metalls. Die funktionellen Schichten können aus dem Metall oder der Metalllegierung bestehen. Die funktionellen Schichten enthalten besonders bevorzugt Silber oder eine silberhaltige Legierung. Solche funktionelle Schichten weisen eine besonders vorteilhafte elektrische Leitfähigkeit bei gleichzeitiger hoher Transmission im sichtbaren Spektralbereich auf. Die Dicke einer funktionellen Schicht beträgt bevorzugt von 5 nm bis 50 nm, besonders bevorzugt von 8 nm bis 25 nm. In diesem Bereich für die Dicke der funktionellen Schicht wird eine vorteilhaft hohe Transmission im sichtbaren Spektralbereich und eine besonders vorteilhafte elektrische Leitfähigkeit erreicht.

Typischerweise ist jeweils zwischen zwei benachbarten funktionellen Schichten zumindest eine dielektrische Schicht angeordnet. Bevorzugt ist unterhalb der ersten und/oder oberhalb der letzten funktionellen Schicht eine weitere dielektrische Schicht angeordnet. Eine dielektrische Schicht enthält zumindest eine Einzelschicht aus einem dielektrischen Material, beispielsweise enthaltend ein Nitrid wie Siliziumnitrid oder ein Oxid wie Aluminiumoxid. Die dielektrische Schicht kann aber auch mehrere Einzelschichten umfassen, beispielsweise Einzelschichten aus einem dielektrischen Material, Glättungsschichten, Anpassungsschichten, Blockerschichten und / oder Antireflexionsschichten. Die Dicke einer dielektrischen Schicht beträgt beispielsweise von 10 nm bis 200 nm.

Dieser Schichtaufbau wird im Allgemeinen durch eine Folge von Abscheidevorgängen erhalten, die durch ein Vakuumverfahren wie die magnetfeldgestützte Kathodenzerstäubung durchgeführt wird.

Weitere geeignete elektrisch leitfähige Schichten L enthalten bevorzugt Indium-Zinnoxid (ITO), fluordotiertes Zinnoxid (SnO₂:F) oder aluminiumdotiertes Zinkoxid (ZnO:Al).

Die elektrisch leitfähige Schicht L kann prinzipiell jede Beschichtung sein, die elektrisch kontaktiert werden kann. Soll die erfindungsgemäße Verbundglas-Scheibe 100 die Durchsicht ermöglichen, wie es beispielsweise bei Scheiben im Fensterbereich der Fall ist, so ist die elektrisch leitfähige Schicht L bevorzugt transparent. In einer vorteilhaften Ausgestaltung ist die elektrisch leitfähige Schicht L eine Schicht oder ein Schichtaufbau mehrerer Einzelschichten mit einer Gesamtdicke von kleiner oder gleich 2 μm, besonders bevorzugt kleiner oder gleich 1 μm.

Im dargestellten Ausgestaltungsbeispiel ist der Aufbau und die Abstimmung einer Sensorelektronik derart abgestimmt, dass bei Berührung der außenseitigen Scheibenoberfläche IV der Glas-Scheibe GS₁ über dem Berührungsbereich 11 des kapazitiven Schaltbereichs ein Schaltsignal ausgelöst wird, wobei bei Berührung der außenseitigen Scheibenoberfläche I der Glas-Scheibe GS₂ über dem kapazitiven Schaltbereich kein Schaltsignal ausgelöst wird. Dazu werden die Dicken und die Materialien der erfindungsgemäßen Verbundscheibe 100 erfindungsgemäß so gewählt, dass der Flächenkapazitätsbelag $c_I$ zwischen dem Berührungsbereich 11 und der außenseitigen Oberfläche IV der Glas-Scheibe GS₁ größer als der Flächenkapazitätsbelag $c_A$ zwischen dem Berührungsbereich 11 und der außenseitigen Oberfläche I der Glas-Scheibe GS₂ ist.

Der Flächenkapazitätsbelag $c_I$ beziehungsweise $c_A$ ist im Rahmen der vorliegenden Erfindung definiert als die Kapazität eines Plattenkondensators desjenigen Bereichs der Verbundglas-Scheibe 100, der sich durch orthogonale Projektion des Berührungsbereichs 11 zwischen dem Berührungsbereich 11 und der außenseitigen Oberfläche IV der Glas-Scheibe $GS_1$ beziehungsweise der außenseitigen Oberfläche I der Glas-Scheibe $GS_2$ ergibt, wobei die sich ergebende Kapazität auf die Fläche des Berührungsbereichs normiert wird.

Im in Figur 4 detailliert dargestellten Beispiel ergibt sich der Flächenkapazitätsbelag $C_I$ zwischen dem Berührungsbereich 11 und der außenseitigen Oberfläche IV der Glas-Scheibe $GS_1$ als die Serienschaltung

der Einzelkapazitätsbeläge $\frac{1}{C_I} = \frac{1}{C_1} + \frac{1}{C_2}$ , wobei sich der Einzelkapazitätsbelag zu $c_i = \varepsilon_0 {}^*\varepsilon_{r,i} /d_i$ ergibt. Dies entspricht der Kapazität $C_i$ der jeweiligen Einzellage mit relativer Permittivität $\varepsilon_{r,i}$ und Dicke $d_i$, normiert auf die Fläche A des Berührungsbereichs 11, also $c_i = C_i/A$. Analog hierzu ergibt sich Flächenkapazitätsbelag $c_A$ zwischen dem Berührungsbereich 11 und der außenseitigen Oberfläche I der Deckscheibe 4 als die Serienschaltung der Einzelkapazitätsbeläge $\frac{1}{C_A} = \frac{1}{C_3} + \frac{1}{C_4}$ .

Weiterhin kann die Verbundglas-Scheibe auch eine Low-E-Beschichtung auf der innenseitigen Oberfläche IV der Verbundglas-Scheibe 100 aufweisen, wobei mindestens ein kapazitiver Schaltbereich durch mindestens eine beschichtungsfreie Trennlinie U aus der Low-E-Beschichtung elektrisch abgetrennt ist.

Außenseitige Oberfläche der Verbundglas-Scheibe 100 bedeutet bei einer Fahrzeugverglasung / Architekturscheibe / Bauverglasung hierbei die Oberfläche der Scheibe, die nach außen, also von dem (Fahrzeug-) Innenraum weg weist. Innenseitige Oberfläche bedeutet demnach die Oberfläche der Verbundglas-Scheibe 100, die zum (Fahrzeug-) Innenraum hin weist.

Diese Low-E Beschichtung enthält mindestens eine funktionelle Schicht und optional jeweils eine oder mehrere Haftschichten, Barriereschichten und/oder Antireflexionsschichten. Die Low-E-Beschichtung ist bevorzugt ein Schichtsystem aus jeweils mindestens einer Haftschicht, einer funktionellen Schicht, einer Barriereschicht, einer Antireflexionsschicht und einer weiteren Barriereschicht.

Besonders geeignete Low-E-Beschichtungen enthalten eine funktionelle Schicht aus mindestens einem elektrisch leitfähigen Oxid (TCO), bevorzugt Indium-Zinnoxid (ITO), fluordotiertes Zinnoxid ($SnO_2$:F), antimon-dotiertes Zinnoxid ($SnO_2$:Sb), aluminiumdotiertes Zinkoxid (ZnO:Al) und/oder galliumdortiertes Zinkoxid (ZnO:Ga).

Besonders vorteilhafte Low-E-Beschichtungen haben eine innenraumseitige Emissivität der erfindungsgemäßen Verbundglas-Scheibe 100 von kleiner oder gleich 60%, bevorzugt kleiner oder gleich 45%, besonders bevorzugt kleiner oder gleich 30% und insbesondere kleiner oder gleich 20%. Mit innenraumseitiger Emissivität wird dabei das Maß bezeichnet, welches angibt, wie viel Wärmestrahlung die Scheibe in Einbaulage im Vergleich zu einem idealen Wärmestrahler (einem schwarzen Körper) in einen Innenraum, beispielsweise eines Gebäudes oder eines Fahrzeugs abgibt. Unter Emissivität wird der normale Gesamtemissionsgrad bei 283 K nach der Norm EN 12898 verstanden.

In einer vorteilhaften Ausgestaltung beträgt der Flächenwiderstand einer solchen beispielhaften Low-E-Beschichtung von 10 Ohm/Quadrat bis 200 Ohm/Quadrat und bevorzugt von 10 Ohm/Quadrat bis 100 Ohm/Quadrat, besonders bevorzugt von 15 Ohm/Quadrat bis 50 Ohm/Quadrat und insbesondere von 20 Ohm/Quadrat bis 35 Ohm/Quadrat.

Die Absorption der Low-E-Beschichtung im sichtbaren Spektralbereich beträgt bevorzugt von etwa 1% bis etwa 15%, besonders bevorzugt von etwa 1 % bis etwa 7%. Die Absorption der Beschichtung kann dabei bestimmt werden, indem die Absorption einer beschichteten Scheibe gemessen und die Absorption der unbeschichteten Scheibe subtrahiert wird. Die Scheibe weist beispielsweise bei Reflexion bevorzugt einen Farbwert a* von -15 bis +5 und einen Farbwert b* von -15 bis +5 auf, betrachtet von der mit der erfindungsgemäßen Low-E-Beschichtung versehenen Seite aus. Die Angaben a* und b* beziehen sich auf die Farbkoordinaten gemäß dem kolorimetrischen Modell (L*a*b*-Farbraum).

Eine vorteilhafte Low-E-Beschichtung weist im sichtbaren Spektralbereich eine geringe Absorption und eine geringe Reflexion und daher eine hohe Transmission auf. Die Low-E-Beschichtung kann daher auch auf Scheiben verwendet werden, bei denen eine deutliche Verringerung der Transmission nicht gewünscht ist, beispielsweise bei Fensterscheiben in Gebäuden, oder gesetzlich verboten ist, beispielsweise bei Windschutzscheiben oder vorderen Seitenscheiben in Kraftfahrzeugen.

Eine andere vorteilhafte transparente elektrisch leitfähige Schicht L kann auch einen Flächenwiderstand von 0,4 Ohm/Quadrat bis 200 Ohm/Quadrat aufweisen. In einer besonders bevorzugten Ausgestaltung weist die erfindungsgemäße elektrisch leitfähige Schicht einen Flächenwiderstand von 0,5 Ohm/Quadrat bis 20 Ohm/Quadrat auf.

Beschichtungen mit derartigen Flächenwiderständen eignen sich unter anderem zur Beheizung von Fahrzeugscheiben bei typischen Bordspannungen von 12 V bis 48 Volt oder bei Elektrofahrzeugen mit typischen Bordspannungen von bis zu 500 V.

Transparente, elektrisch leitfähige Schichten L können beispielsweise elektrisch beheizt werden, IR-reflektierende Eigenschaften oder Low-E-Eigenschaften aufweisen.

In einer Ausgestaltung der Erfindung weist die Sensoranordnung $S_{touch}$ zumindest eine flächige, transparente, elektrisch leitfähige Schicht L auf, welche durch isolierende Trennlinien U begrenzt ist.

Dies ist beispielhaft in Figur 5 gezeigt. Dort ist auf einem Träger T, der eine elektrische leitfähige Beschichtung L aufweist, ein entsprechender kapazitiver Sensor ausgeformt. Dieser weist zwei vergleichsweise große Flächen $A_1$ und $A_2$ auf, die am dargestellt oberen Ende angeordnet sind. Die Flächen sind über Verbindungen $V_1$ und $V_2$ mit beispielhaften Anschlüssen $AN_1$ und $AN_2$ verbunden. Dabei sind die Anschlüsse $AN_1$ Und $AN_1$ über zwei mittels Lot LOT angebrachte Flachbandanschlüsse $K_1$ und $K_2$ an eine beispielhafte Sensorauswerteelektronik angeschlossen. Andere Formen des Sensoraufbaues, insbesondere kabellose verbundene Sensoren, sind hiermit explizit nicht ausgeschlossen. Mittels der Strukturierung U, die beispielsweise durch Maskierungen im Beschichtungsprozess oder durch Abtragung nach der Beschichtung hergestellt werden können, können nun ähnlich der Erstellung von Platinen Leitungen und Kapazitätsplatten gebildet werden. Beispielhaft sind z.B. mittels der Trennlinie U aus der elektrisch leitfähigen Schicht L die Platte $A_2$ und die Verbindungen $V_2$ und der Anschluss $A_2$ geformt. Mittels einer weiteren Trennlinie U sind aus der elektrisch leitfähigen Schicht L die Platte $A_1$ und die Verbindungen $V_1$ und der Anschluss $A_1$ geformt. Diese Trennlinie(n) U können z.B. mittels Laser (-Ablation) strukturiert werden.

Ohne weiteres ist es möglich sowohl Teile der Sensoranordnung $S_{touch}$ als auch das Hologramm H auf einem gemeinsamen Abschnitt der Kombinationsfolie F; $F_1$, $F_2$ oder einem Träger T innerhalb der Verbundglasscheibe 100 anzuordnen.

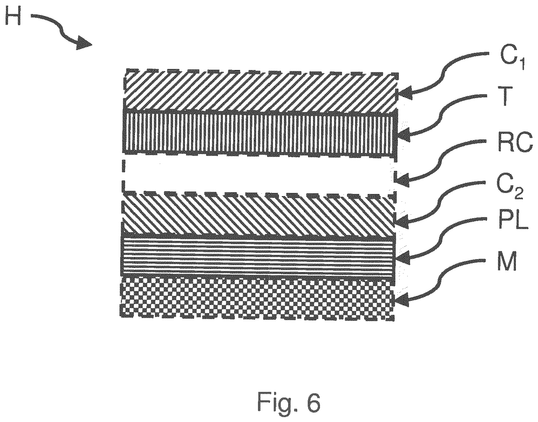

Dazu wird im Folgenden unter Bezug auf Figur 6 kurz der typische Aufbau von herkömmlichen Hologrammen H erläutert, die z.B. zur Produktsicherung (Herkunftskennung etc.) eingesetzt werden, und die auch in Verbundglas-Scheiben 100 gemäß der Erfindung verwendet werden können.

Typischerweise wird eine holographische Struktur (Struktur aufweisend unterschiedliches Dickenprofil und/oder Brechungsindexprofil) durch (Heiß-) Prägen eines beispielsweise prägbaren Lacks auf einem beispielhaften PET-Film von beispielhaft 19 $\mu$m - 50 $\mu$m Dicke hergestellt.

Offensichtlich kann dieser PET-Film zugleich auch als Träger T für elektrische Schichten L der Sensoranordnung $S_{touch}$ dienen.

Typischerweise weist ein solcher PET-Film eine Zugfestigkeit von circa 24 kgf/mm$^2$ auf, wobei die Reißdehnung 120 % - 150 % beträgt und der Wärmschrumpf bei 150°/30min 1 % und weniger beträgt. Typischerweise weisen solche PET-Filme eine Trübung von 1 % bei einer Transmission von 90 % auf.

Ein solcher Träger T kann z.B. mit einer hochreflektiven Metallisierung M beschichtet sein, wobei auch weitere Schichten zur Aufbringung vorgesehen sein können. Die Metallisierung M kann z.B. auf Basis von ZnS hergestellt werden, die einen Brechungsindex von 2,3 - 2,4 bei einem 35 % Reflexionsvermögen aufweist.

Auf der dem Betrachter abgewandten Seite kann sich je nach Bedarf eine Beschichtung $C_1$ befinden. Diese Beschichtung $C_1$ kann beispielsweise ein Bedrucken mit nicht holgrafischen Elementen erlauben.

Auf der dem Betrachter zugewandten Seite kann sich je nach Bedarf eine Trennschicht RC befinden. Weiterhin kann eine zweite Beschichtung $C_2$ optional vorgesehen sein, die z.B. den prägbaren Lack PL trägt.

In der bisherigen Darstellung wurde bewusst auf die Art des Hologramms H nicht eingegangen.

Wesentlich ist, dass das Hologramm sensitiv zur Position eines Betrachters ist. D.h., das Hologramm H ist so gestaltet, dass es durch Umgebungslicht und auch durch gezielte Beleuchtung, sei es durch eine in die Scheibe / Sensoranordnung integrierte Beleuchtung mittels geeigneter (organischer) Leuchtdioden (p)LEDs, sei es durch eine außerhalb des Verbundglas-Scheibe 100 angeordneten Beleuchtungsquelle, so beleuchtet wird, dass der Benutzer der Sensoranordnung $S_{touch}$ die Sensoranordnung lokalisieren kann.

D.h. das Hologramm H kann z.B. so gestaltet sein, dass eine Darstellung des Hologramms H bei einer in Bezug auf den Betrachter reflektiven Beleuchtung erscheint.

D.h. durch gezielte Beleuchtung kann das Erscheinen / Verschwinden eines Hologramms gesteuert werden, sodass z.B. nur aktive Sensoranordnungen als solche erkennbar sind, während inaktive Sensoranordnungen verborgen bleiben. Zudem ist es möglich über unterschiedliche Beleuchtungen, z.B. unterschiedliche Winkel / unterschiedliches Licht in Bezug auf die Verbundglas-Scheibe 100 oder eine Prägung des Hologramms H, die Darstellung unterschiedlicher Hologramme in Bezug auf den Betrachter zu erzeugen.

Erfindungsgemäß ist vorgesehen, dass eine Darstellung des Hologramms H bei einer in Bezug auf den Betrachter transmissiven Beleuchtung erscheint.

D.h. durch äußere Beleuchtung kann das Erscheinen / Verschwinden eines Hologramms gesteuert werden, sodass z.B. nur bestimmte Sensoranordnungen als solche erkennbar sind, während inaktive Sensoranordnungen verborgen bleiben.

Somit kann das Hologramm H auch mehrere überlagerte Darstellungen aufweisen, die abhängig von der Beleuchtung (z.B. dem Winkel der Beleuchtung) zur Darstellung in Bezug auf den Benutzer gelangen.

Eine Ausgestaltung der Erfindung zeigt eine Verbundglasscheiben-Anordnung, die eine Verbundglas-Scheibe 100 und eine Beleuchtungsquelle aufweist, wobei die Beleuchtungsquelle kontrollierbar das Hologramm H beleuchtet, so dass es dem Benutzer erscheint.

Die Beleuchtungsquelle weist bevorzugt eine LED oder OLED auf. Der besondere Vorteil liegt in den kleinen Abmessungen und der geringen Leistungsaufnahme. Der von der Beleuchtungsquelle emittierte Wellenlängenbereich kann im Bereich des sichtbaren Lichtes frei gewählt werden, beispielsweise nach praktischen und / oder ästhetischen Gesichtspunkten. Das Lichteinstrahlmittel kann optische Elemente umfassen, insbesondere zur Lenkung des Lichts, bevorzugt einen Reflektor und / oder einen Lichtwellenleiter, beispielsweise eine Glasfaser oder eine polymere optische Faser. Die Beleuchtungsquelle kann an einer beliebigen Stelle (relativ zu) der Glas-Scheibe $GS_1$ oder der Glas-Scheibe $GS_2$ angeordnet sein, insbesondere am Seitenrand der Glas-Scheibe $GS_1$ oder der Glas-Scheibe $GS_2$ oder in einer kleinen Ausnehmung inmitten der Glas-Scheibe $GS_1$ oder der Glas-Scheibe $GS_2$.

Das Lichtablenkmittel weist bevorzugt Partikel, Punktraster, Aufkleber, Anlagerungen, Einkerbungen, Einritzungen, Strichraster, Aufdrucke und / oder Siebdrucke auf und ist dazu geeignet, das in der Glas-Scheibe $GS_1$ oder der Glas-Scheibe $GS_2$ transportierte Licht aus derselben auszukoppeln.

Das Lichtablenkmittel kann an jeder beliebigen Position auf der Ebene der Glas-Scheibe $GS_1$ oder der Glas-Scheibe $GS_2$ angeordnet sein. Besonders vorteilhaft ist es, wenn das Lichtablenkmittel im Bereich oder in der unmittelbaren Umgebung des Berührungsbereichs angeordnet ist und so ein schnelles Auffinden des ansonsten kaum sichtbaren Berührungsbereichs der Sensoranordnung $S_{touch}$ ermöglicht. Dies ist insbesondere bei Nacht oder Dunkelheit besonders vorteilhaft.

Alternativ kann Licht durch einen Lichtleiter, der auf der Glas-Scheibe $GS_1$ oder der Glas-Scheibe $GS_2$, oder einer Zwischenschicht (z.B. der Kombinationsfolie F, $F_1$, $F_2$) angeordnet ist, an den Berührungsbereich der Sensoranordnung $S_{touch}$ herangeführt werden und diesen markieren.

Alternativ oder in Kombination kann das Lichteinstrahlmittel zusammen mit dem Lichtablenkmittel eine Information auf der Scheibe visualisieren, beispielsweise den Schaltzustand des kapazitiven Schaltbereichs wiedergeben oder anzeigen, ob beispielsweise eine elektrische Funktion eingeschaltet oder ausgeschaltet ist.

Gemäß einer weiteren Ausgestaltung der Erfindung kann die erfindungsgemäße Verbundglas-Scheibe 100 in Fahrzeugen oder Gebäuden oder als Informationsdisplay verwendet werden.

D.h. die Anwendungsbreite ist sehr hoch, sodass die erfindungsgemäße Verbundglas-Scheiben 100 kostengünstig hergestellt werden können.

In einem beispielhaften Verfahren zur Herstellung einer Verbundglas-Scheibe 100 wird zunächst ein Hologramm H erhalten. Dieses Hologramm H kann Bestandteil der Sensoranordnung $S_{touch}$ sein oder aber ein eigenständiges Hologramm H (z.B. auf einem träger T) sein. Das erhaltene Hologramm H wird in ein Vorprodukt der Verbundglasscheibe 100 eingebracht, wobei der Schritt des Einbringens ausgewählt ist aus Laminieren, Kleben, Auflegen. Nach dem Einbringen und eventuellen weiteren Zwischenschritten in Bezug auf die Sensoranordnung wird die Verbundglas-Scheibe 100 fertiggestellt.

Durch die Verwendung von Hologrammen H wird die Sensoranordnung $S_{touch}$ positionssensitiv dargestellt. Dabei macht sich die Erfindung zu eigen, dass

ein Benutzer $B_1$ in einem typischen Abstand (circa 60 cm) sich vor der Verbundglas-Scheibe 100 befindet, sodass er in der Lage ist, den Sensor der Sensoranordnung $S_{touch}$ zu bedienen. Dabei wird das Hologramm H so ausgelegt, dass es bei entsprechendem Lichteinfall im Wesentlichen in diesem Abstand und bei Betrachtung aus einem bestimmten Winkelbereich gut zu erkennen ist während es für "Betrachter" aus anderen Abständen und/oder Winkelbereichen teiltransparent wird oder sogar ganz unsichtbar wird.

Während bei Tag das Umgebungslicht in aller Regel ausreicht, um ein Hologramm H für den Betrachter $B_1$ sichtbar zu machen kann es erforderlich sein bei Dunkelheit für eine äußere Beleuchtung zu sorgen, sodass das Hologramm H wieder sichtbar wird. Diese Beleuchtungsquelle kann wiederum geeignet platziert sein. Z.B. kann diese in einem Fahrzeug am Dachhimmel, dem Armaturenbrett oder einer A-Säule, in einer Rückspiegelhalterung, etc. angeordnet sein, sodass das Licht der Beleuchtungsquelle den Betrachter $B_1$ nicht stört.

Ein weiterer Vorteil von Hologrammen H ist, dass diese Hologramme nicht auf der dem Benutzer abgewandten Seite zu sehen sind. Beispielsweise sind eine Sensoranordnung $S_{touch}$ und das Hologramm H hierzu so angeordnet, dass sie auf der Innenseite eines Fahrzeuges zu sehen sind. Auf der Außenseite hingegen ist das Hologramm H nicht zu sehen. Somit ist auch die Lokalisierung der Sensoranordnung $S_{touch}$ nicht oder nicht ohne weiteres auffindbar, sodass eine fehlerhafte Bedienung von außen erschwert wird.

Zusätzlich kann mittels der Hologramme H auch noch weitere Funktionalität bereitgestellt werden. So ist es auch möglich, die Herstellerfirma zu präsentieren und/oder ein Echtheitszertifikat bereitzustellen. Dies ist bei sicherheitskritischen Elementen häufig von Vorteil.

**Patentansprüche**

1. Verbundglas-Scheibe (100) mit einer Sensoranordnung ($S_{touch}$), wobei die Verbundglas-Scheibe eine transparente erste Glas-Schicht ($GS_1$) und eine transparente zweite Glas-Schicht ($GS_2$) verbunden durch eine transparente Kombinationsfolie (F; $F_1$, $F_2$) aufweist, wobei die Sensoranordnung ($S_{touch}$) geeignet ist die Annäherung eines Fingers zu erkennen, **dadurch gekennzeichnet, dass**,

   - am Ort der Sensoranordnung ein zumindest teil-transparentes Hologramm (H) angeordnet ist, welches bei Beleuchtung für einen Betrachter optisch wahrnehmbar wird,
   - das Hologramm (H) zwischen der ersten Glas-Schicht ($GS_1$) und der zweiten Glas-Schicht ($GS_2$) angeordnet ist, und
   - eine Darstellung des Hologramms (H) bei einer in Bezug auf den Betrachter transmissiven Beleuchtung durch Umgebungslicht erscheint.

**2.** Verbundglas-Scheibe (100) nach Anspruch 1, wobei eine weitere Darstellung des Hologramms (H) durch gezielte Beleuchtung bei einer in Bezug auf den Betrachter reflektiven Beleuchtung erscheint.

**3.** Verbundglas-Scheibe (100) nach Anspruch 1 oder 2, wobei die Sensoranordnung ($S_{touch}$) einen kapazitiven Sensor oder einen optischen Sensor aufweist.

**4.** Verbundglas-Scheibe (100) nach einem der Ansprüche 1 bis 3, wobei das Hologramm (H) auf der Kombinationsfolie (F) aufgebracht ist.

**5.** Verbundglas-Scheibe (100) nach einem der Ansprüche 1 bis 4, wobei die Kombinationsfolie (F; $F_1$, $F_2$) zumindest einen Stoff ausgewählt aus der Gruppe aufweisend Polybutylenterephthalat (PBT), Polycarbonat (PC), Polyethylenterephthalat (PET) und Polyethylennaphthalat (PEN), Polyvinylchlorid (PVC), Polyvinylfluoride (PVF), Polyvinylbutyral (PVB), Ethylenvinylacetat (EVA), Polyacrylat (PA), Polymethylmethacrylat (PMMA), Polyurethan (PUR), und/oder Gemische und Copolymere davon enthält.

**6.** Verbundglas-Scheibe (100) nach einem der Ansprüche 1 bis 5, wobei zumindest Teile der Sensoranordnung ($S_{touch}$) als Drähte auf oder in der Kombinationsfolie (F; $F_1$, $F_2$) aufgebracht bzw. eingebracht sind.

**7.** Verbundglas-Scheibe (100) nach einem der Ansprüche 1 bis 6, wobei die Sensoranordnung ($S_{touch}$) zumindest eine flächige, transparente, elektrisch leitfähige Schicht (TES) aufweist, welche durch isolierende Trennlinien (U) begrenzt ist.

**8.** Verbundglas-Scheibe (100) nach einem der Ansprüche 1 bis 7, wobei zumindest Teile der Sensoranordnung ($S_{touch}$) und das Hologramm (H) auf einem gemeinsamen Abschnitt der Kombinationsfolie (F; $F_1$, $F_2$) oder einem Träger (T) innerhalb der Verbundglasscheibe (100) angeordnet sind.

**9.** Verwendung einer Verbundglas-Scheibe (100) nach einem der Ansprüche 1 bis 8 in Fahrzeugen oder Gebäuden oder als Informationsdisplay.

**10.** Verfahren zur Herstellung einer Verbundglas-Scheibe (100) nach einem der Ansprüche 1 bis 8, aufweisend die Schritte:

    - Erhalten eines Hologramms (H),
    - Einbringen des Hologramms (H) auf eine Kombinationsfolie (F; $F_1$, $F_2$) der Verbundglasscheibe, wobei der Schritt des Einbringens ausgewählt ist aus Laminieren oder Kleben auf die Kombinationsfolie (F; $F_1$, $F_2$),

    - Fertigstellen der Verbundglasscheibe (1).

**Claims**

**1.** Laminated glass pane (100) having a sensor assembly ($S_{touch}$), wherein the laminated glass pane has a transparent first glass layer ($GS_1$) and a transparent second glass layer ($GS_2$) joined by a transparent combina tion film (F; $F_1$; $F_2$), wherein the sensor assembly ($S_{touch}$) is suitable for detecting the approach of a finger,
**characterized in, that**

    - an at least semi-transparent hologram (H) is arranged at the location of the sensor assembly, which hologram becomes visible to a viewer upon illumination,
    - the hologram (H) is arranged between the first glass layer ($GS_1$) and the second glass layer ($GS_2$), and
    - a view of the hologram (H) appears upon transmissive illumination in relation to the viewer by external illumination.

**2.** Laminated glass pane (100) according to claim 1, wherein a further view of the hologram (H) appears upon reflective illumination in relation to the viewer by selective illumination.

**3.** Laminated glass pane (100) according to claim 1 or 2, wherein the sensor assembly ($S_{touch}$) has a capacitive sensor or an optical sensor.

**4.** Laminated glass pane (100) according to one of claims 1 through 3, wherein the hologram (H) is applied on the combination film (F).

**5.** Laminated glass pane (100) according to one of claims 1 through 4, wherein the combination film (F; $F_1$, $F_2$) contains at least one material selected from the group comprising polybutylene terephthalate (PBT), polycarbonate (PC), polyethylene terephthalate (PET) and polyethylene naphthalate (PEN), polyvinyl chloride (PVC), polyvinyl fluoride (PVF), polyvinyl butyral (PVB), ethylene vinyl acetate (EVA), polyacrylate (PA), polymethyl methacrylate (PMMA), polyurethane (PUR), and/or mixtures and copolymers thereof.

**6.** Laminated glass pane (100) according to one of claims 1 through 5, wherein at least parts of the sensor assembly ($S_{touch}$) are applied or introduced as wires on or in the combination film (F; F1, F2).

**7.** Laminated glass pane (100) according to one of claims 1 through 6, wherein the sensor assembly ($S_{touch}$) has at least one planar, transparent, electrically conductive layer (TES), which is delimited by insulating separating lines (U).

8. Laminated glass pane (100) according to one of claims 1 through 7, wherein at least parts of the sensor assembly ($S_{touch}$) and the hologram (H) are arranged on a common section of the combination film (F; $F_1$, $F_2$) or a carrier (T) within the laminated glass pane (100).

9. Use of a laminated glass pane ( 100) according to one of claims 1 through 8 in vehicles or buildings or as an information display.

10. Method for producing a laminated glass pane (100) according to one of claims1 through 8, comprising the steps:

- obtaining a hologram (H),
- introducing the hologram (H) on a combination film (F; $F_1$, $F_2$) of the laminated glass pane, wherein the step of the introduction is selected from laminating or gluing on the combination film (F; $F_1$, $F_2$),
- completing the laminated glass pane (1).

**Revendications**

1. Vitre en verre feuilleté (100) ayant un ensemble de capteur ($S_{touch}$), dans laquelle la vitre en verre feuilleté a une première couche de verre transparente ($GS_1$) et une seconde couche de verre transparente ($GS_2$) jointes par un film de combinaison transparent (F; $F_1$; $F_2$), dans laquelle l'ensemble de capteur ($S_{touch}$) est approprié pour détecter l'approche d'un doigt, **caractérisé en ce que**

- un hologramme au moins semi-transparent (H) est disposé à l'emplacement de l'ensemble capteur, lequel hologramme devient visible pour un observateur lorsqu'il est éclairé,
- l'hologramme (H) est disposé entre la première couche de verre ($GS_1$) et la seconde couche de verre ($GS_2$), et
- une vue de l'hologramme (H) apparaît lors de l'illumination par transmission par rapport au spectateur par illumination externe.

2. Vitre en verre feuilleté (100) selon la revendication 1, dans laquelle une autre vue de l'hologramme (H) apparaît lors d'un éclairage réfléchissant par rapport à l'observateur par éclairage sélectif.

3. Vitre en verre feuilleté (100) selon la revendication 1 ou 2, dans lequel l'ensemble de capteurs ($S_{touch}$) comporte un capteur capacitif ou un capteur optique.

4. Vitre en verre feuilleté (100) selon l'une des revendications 1 à 3, dans lequel l'hologramme (H) est appliqué sur le film de combinaison (F).

5. Vitre en verre feuilleté (100) selon l'une des revendications 1 à 4, dans lequel le film de combinaison (F; $F_1$, $F_2$) contient au moins un matériau sélectionné dans le groupe téréphtalate de polybutylène (PBT), le polycarbonate (PC), le polyéthylène téréphtalate (PET) et le polyéthylène naphtalate (PEN), le polychlorure de vinyle (PVC), fluorure de polyvinyle (PVF), butyral de polyvinyle (PVB), éthylène-acétate de vinyle (EVA), polyacrylate (PA), polyméthacrylate de méthyle (PMMA), polyuréthane (PUR) et/ou leurs mélanges et copolymères.

6. Vitre en verre feuilleté (100) selon l'une des revendications 1 à 5, dans laquelle au moins parties de l'ensemble capteur ($S_{touch}$) sont appliquées ou introduites sous forme de fils sur ou dans le film combiné (F ; $F_1$, $F_2$).

7. Vitre en verre feuilleté (100) selon l'une des revendications 1 à 6, dans laquelle l'ensemble de capteurs ($S_{touch}$) présente au moins une couche plane, transparente, conductrice d'électricité (TES), qui est déformée par un procédé de déverrouillage. (TES), qui est délimitée par des lignes de séparation isolantes (U).

8. Vitre en verre feuilleté (100) selon l'une des revendications 1 à 7, dans lequel au moins des parties de l'ensemble capteur ($S_{touch}$) et de l'hologramme (H) sont disposées sur une section commune de la feuille de combinaison (F; $F_1$; $F_2$) ou d'un support (T) à l'intérieur de la vitre en verre feuilleté (100).

9. Utilisation d'une vitre en verre feuilleté ( 100) selon l'une des revendications 1 à 8 dans des véhicules ou des bâtiments ou comme affichage d'informations.

10. Procédé de fabrication d'une vitre en verre feuilleté (100) selon l'une des revendications1 à 8, comprenant les étapes :

- obtenir d'un hologramme (H),
- introduire l'hologramme (H) sur un film de combinaison (F; $F_1$, $F_2$) du vitre en verre feuilleté, dans lequel l'étape d'introduction est choisie parmi le laminage ou le collage sur le film de combinaison (F; $F_1$, $F_2$),
- compléter de la vitre en verre feuilleté (1).

Fig. 1

Fig. 2

Fig. 3

Fig. 4

Fig. 5

H

C<sub>1</sub>
T
RC
C<sub>2</sub>
PL
M

Fig. 6

**EP 3 465 396 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2010179725 A1
- US 6654070 B1
- WO 2013091961 A1
- US 2006275599 A1
- DE 202006006192 U1
- EP 0899882 A1
- US 6452514 B1
- EP 1515211 A1
- WO 2013053611 A1
- DE 3532120 A1
- DE 202008017611 U1
- EP 0847965 B1
- WO 2012052315 A1